Europäisches Patentamt

European Patent Office

Office européen des brevets

(19)

(11) Veröffentlichungsnummer: **0 068 190**
**B1**

(12) **EUROPÄISCHE PATENTSCHRIFT**

(45) Veröffentlichungstag der Patentschrift:
**02.04.86**

(21) Anmeldenummer: **82104998.8**

(22) Anmeldetag: **08.06.82**

(51) Int. Cl.⁴: **A 22 C 11/02**

(54) Zum gleichzeitigen Entraffen, Glätten und Bremsen einer gerafften Schlauchhülle geeignete Vorrichtung.

(30) Priorität: **19.06.81 DE 3124025**

(43) Veröffentlichungstag der Anmeldung:
**05.01.83 Patentblatt 83/1**

(45) Bekanntmachung des Hinweises auf die Patenterteilung:
**02.04.86 Patentblatt 86/14**

(84) Benannte Vertragsstaaten:
**AT BE CH DE FR GB IT LI LU NL SE**

(56) Entgegenhaltungen:
**EP - A - 0 046 560**
**DE - B - 1 177 029**
**FR - A - 1 546 258**
**US - A - 4 077 090**
**US - A - 4 202 075**

(73) Patentinhaber: **HOECHST AKTIENGESELLSCHAFT,
Postfach 80 03 20, D-6230 Frankfurt am Main 80 (DE)**

(72) Erfinder: **Petry, Rudolf, Dipl.-Ing., Erlenweg 1b,
D-6200 Wiesbaden (DE)**

ACTORUM AG

## Beschreibung

Die Erfindung bezieht sich auf eine Vorrichtung von der im Oberbegriff des Anspruchs 1 genannten Art.

Zur Verpackung von Nahrungsmitteln, z.B. Fleischwaren in Form von Wurstmasse, werden bekanntlich geraffte, schlauchförmige Hüllen aus synthetischem, halbsynthetischem oder natürlichem Material verwendet. Diese Hüllen, in der Fachsprache auch als «Raupen» oder «Hohlstäbe» bezeichnet, werden aus langen Hüllen durch Fälteln und längsaxiales Stauchen hergestellt, wobei die Länge der gerafften Hülle gewöhnlich nur noch 1 bis 3% der Ursprungslänge beträgt. Im allgemeinen wird zum Abfüllen der Wurstmasse zunächst eine einseitig verschlossene, geraffte schlauchförmige Hülle über das Füllrohr einer Wurstabfüllmaschine geschoben. Die Wurstmasse wird dann unter Druck durch das Füllrohr in die Hülle gepresst, welche dadurch fortlaufend entrafft wird. Nach Erreichen einer bestimmten Länge werden zylinderförmige Würste abgebunden und verschlossen.

Der Durchmesser der erhaltenen Würste sollte aus verschiedenen Gründen über die gesamte Länge konstant bleiben. Nur ein gleichmässiger Durchmesser, dessen Grösse z.B. vom Hüllenmaterial abhängig ist, gewährleistet einen optimalen Abfüllvorgang. Auch besteht bei Überfüllung die Gefahr des Aufplatzens der Wursthülle, während die Wursthülle bei zu geringer Füllung eine faltige Oberfläche zeigt.

Es wurden bereits verschiedene Vorrichtungen zum Abfüllen von Wurstmasse in geraffte, schlauchförmige Hüllen vorgeschlagen, bei denen spezielle Einrichtungen zum Entraffen, Glätten und Bremsen einen möglichst gleichmässigen Durchmesser der gefüllten Packung erzielen sollen.

So ist es üblich, in der Nähe der Öffnung des Füllrohres der Abfüllmaschine ein Kalibrierteil anzubringen, welches mit seiner Oberfläche auf die Innenwand der zu füllenden Hülle angepresst wird und diese aufweitet. Durch diesen Anpressdruck treten zwischen dem Kalibrierteil und der Innenwand der Hülle Reibungskräfte auf, welche den Abzug der Hülle bremsen (US-A-2 871 508).

Es ist auch bekannt, die geraffte, schlauchförmige Hülle zusammen mit einer Kalibrierscheibe zu verpacken und diese Anordnung vor dem Füllvorgang mit dem Füllrohr zu verbinden (US-A-4 007 761). Die Kalibrierscheibe wird von einem ungerafften Teil eingeschlossen, wobei allerdings der Aussenumfang der Kalibrierscheibe grösser sein soll als der Innenumfang der ungerafften Hülle. Beim Füllvorgang (US-A-4 077 090) wird die Hülle über die Kalibrierscheibe gezogen und somit gedehnt und aufgeweitet. Die Kalibrierscheibe muss aus starrem unelastischem Material bestehen, so dass ihr Durchmesser durch die Andruckkraft der Hülle gegen den Umfang der Kalibrierscheibe nicht verändert werden kann. Das Bremsen der Hülle beim Abziehen vom gerafften Hüllenteil während des Füllvorgangs erfolgt durch eine zusätzliche nach der Kalibrierscheibe angeordnete Einrichtung in Form eines Rings mit einem ringförmigen Ansatz, wobei die Bremswirkung durch die Reibkraft zwischen Schlauchhülle und dem Ansatz bestimmt wird.

Diese unelastische Kalibrierscheibe zeigt den Nachteil, dass bei fertigungstechnisch nicht zu vermeidenden Schwankungen des Hüllenumfangs keine optimale Füllung der Hülle erreicht wird. Bei zu kleinem Kaliber der Hülle besteht ausserdem die Gefahr, dass sie durch die Kalibrierscheibe beschädigt wird oder abreisst; zumindest tritt eine besonders starke Reibung zwischen Hülle und Kalibrierscheibe auf, so dass die Hülle mit Wurstmasse überfüllt werden kann und beim Brühen dazu neigt, dem auftretenden hohen Druck nicht standzuhalten und zu platzen.

Ferner ist eine Kalibiriervorrichtung bekannt (US-A-4 202 075), die aus einem flexiblen Material besteht und deren Durchmesser variierbar ist. Auch mit dieser Vorrichtung soll die Schlauchhülle vor dem Befüllen mit Wurstmasse gedehnt und aufgeweitet werden, wobei diese Vorrichtung eine steuerbare Aufweitung gestattet. Allerdings können auch in diesem Fall starke Reibungskräfte zwischen der Schlauchhülle und dem Kalibrierteil auftreten. Das Abbremsen der Schlauchhülle erfolgt auch in diesem Fall mit einem nach der Kalibriervorrichtung angeordneten Bremselement, welches die Schlauchhülle gegen das Füllrohr anpresst.

Ausgehend von diesem Stand der Technik besteht die Aufgabe der vorliegenden Erfindung darin, eine Vorrichtung zu schaffen, die zum gleichzeitigen Entfälteln, Glätten und Abbremsen einer gerafften Schlauchhülle vor dem Befüllen mit einer Stopfvorrichtung geeignet ist, wobei die Schlauchhülle problemlos unter gleichzeitigem Abbremsen vom gerafften in einen einwandfreien faltenfreien Zustand übergeführt werden kann, ohne dass Gefahr besteht, dass die Schlauchhülle bei diesem Vorgang vom Bremsteil oder vom Kalibrierteil beschädigt wird. Ferner soll die Vorrichtung ein Bremsteil umfassen, welches einen ruckfreien Abzug ermöglicht, wobei die Gefahr von Abrissen der Schlauchhülle verringert ist.

Überraschenderweise wird diese Aufgabe gelöst durch die Vorrichtung mit den in Anspruch 1 aufgezeigten Merkmalen. Die Unteransprüche betreffen Weiterbildungen der Erfindung.

Der Einfachheit halber wird anstelle von «entraffenden, glättenden und bremsenden Elementen» im folgenden von «glättenden Elementen» gesprochen, wobei ferner zu berücksichtigen ist, dass sie durch das Anpressen der Schlauchhülle gegen den Anschlagzylinder auch bremsende Funktion ausüben.

Vorzugsweise ist der maximale Durchmesser des Schlauches beim Gleiten über die ihn entraffenden, glättenden und bremsenden Elemente kleiner als sein äusserer Durchmesser im entrafften Zustand, was insofern nicht vorhersehbar war, da man bisher die Auffassung vertrat, dass eine Spreizung und Aufweitung der Schlauchhülle zum gleichzeitigen Entfälteln und Glätten der Schlauchhülle stets erforderlich ist.

Es wurde zwar auch ein ringförmiger Hohlkörper beschrieben, dessen maximaler Durchmesser kleiner ist als der innere Durchmesser der entrafften Schlauchhülle (US-A-3 975 795). Dieser bekannte Hohlkörper soll allerdings nur zum Glätten der Schlauchhülle dienen, während ein vor dem ringförmigen Hohlkörper angeordneter Ring, durch dessen Bohrung die Schlauchhülle gezogen wird, zum Entraffen vorgesehen ist.

Wie nun überraschenderweise gefunden wurde, ist eine Aufweitung der Schlauchhülle während dem Entraffen, Glätten oder Bremsen für ein einwandfreies Befüllen der Schlauchhülle nicht erforderlich und im allgemeinen nicht von besonderem Vorteil. Es ist vielmehr vollkommen ausreichend und bei Schläuchen mit Kaliberschwankungen von Vorteil, wenn die Schlauchhülle zum gleichzeitigen Entraffen, Glätten und Bremsen über die Aussenseite der glättenden Elemente gezogen wird, ohne dass eine Aufweitung der Schlauchhülle über ihren ursprünglichen Durchmesser hinaus erforderlich ist, wobei der maximale Aussendurchmesser der Schlauchhülle vorzugsweise 70 bis 99%, insbesondere 90 bis 99%, ihres Aussendurchmessers im ungerafften Zustand beträgt. Dieser maximale Durchmesser wird festgelegt durch die lichte Weite des im Querschnitt im wesentlichen kreisringförmigen Anschlagzylinders, gegen dessen zylindrische Innenfläche die Aussenseite der Schlauchhülle durch die glättenden Elemente angedrückt wird. Ferner erfolgt das Abbremsen der Schlauchhülle mit einer einzigen Vorrichtung, welche gleichzeitig die Funktion hat, die Schlauchhülle zu entraffen und zu glätten, wobei ein Spreizen oder Dehnen der Schlauchhülle unterbleibt.

Ein wesentlicher Vorteil der Vorrichtung und der Anordnung nach der Erfindung liegt auch darin, dass die schlauchförmige Hülle im bereits entrafften, faltenfreien Zustand von innen gegen den auf ihrer Aussenseite anliegenden Anschlagzylinder gedrückt wird. Hierbei erfolgt die Bremswirkung bei örtlich fest eingestelltem Anschlagzylinder durch die einstellbare Anpresskraft der glättenden Elemente im Innern der entrafften Schlauchhülle. Die Änderung dieser Anpresskraft, mit welcher die glättenden Elemente die schlauchförmige Hülle gegen den Anschlagzylinder andrücken, und somit auch die Änderung der Bremswirkung, lässt sich auch während des Füllprozesses steuern, indem man das erste oder zweite Aussenrohr längsaxial verschiebt. Hierbei führen die glättenden Elemente eine Schwenkbewegung in Richtung oder Gegenrichtung zum Anschlagzylinder aus. Mit zunehmender Bremswirkung wird der Abzug der Schlauchhülle beim Füllvorgang verzögert und somit das Füllkaliber der gefüllten Schlauchhülle grösser.

Die schlauchförmige Hülle besteht beispielsweise aus einem üblichen zur Herstellung von Würsten verwendeten Material, wie Cellulosehydrat, Kollagen oder Kunstdarm, z.B. aus Polyamid oder Polyester, und ist gegebenenfalls faserverstärkt, insbesondere mit einer Papiereinlage. Sie zeigt gegebenenfalls auf ihrer äusseren und/oder inneren Oberfläche eine übliche Beschichtung, z.B. aus einem wasserdampf- und sauerstoffundurchlässigen Material, welche beispielsweise mit einem üblichen die Haftung verbessernden Mittel auf der Schlauchoberfläche verankert wird. Bei Verwendung einer Hülle aus Cellulosehydrat kann diese einen üblichen Wassergehalt von z.B. 6 bis 15%, aber auch einen sehr hohen Wassergehalt besitzen, z.B. bis zu etwa 35%, so dass sie vor dem Befüllen nicht gewässert werden muss. Cellulosehydrathüllen werden gewöhnlich durch Koagulation von Viskose und Regenerierung der Cellulose hergestellt und enthalten Weichmacher wie Glycerin.

Wesentliche erfindungsgemässe Vorrichtungsteile sind die glättenden Elemente, die in der Nähe der Füllrohröffnung auf dem Füllrohr angeordnet sind, und der Anschlagzylinder, gegen den die glättenden Elemente gepresst werden können. Die Stopfvorrichtung dient zum Abfüllen z.B. von Wurstmasse in schlauchförmige Hüllen.

Die glättenden Elemente sind vorzugsweise relativ starr und bestehen gewöhnlich aus Metall.

Der Anschlagzylinder ist während des Füllvorgangs örtlich fixiert. Er kann auch aus zwei oder mehreren einzelnen Segmenten bestehen, die zusammen einen um das Füllrohr angeordneten Ring ergeben, wobei gegebenenfalls zwischen einzelnen benachbarten Segmenten Abstände vorhanden sind. Die Form und die Anzahl der Segmente ist dann den glättenden Elementen angepasst. Die innere Oberfläche des Anschlags, d.h. seine zylindrische Innenfläche, besteht vorzugsweise aus elastischem Material, z.B. aus Gummi, und zeigt eine glatte Oberfläche, so dass die Schlauchhülle beim Anpressen nicht beschädigt wird.

Nach dem Durchlaufen des Anschlagzylinders wird die Schlauchhülle unmittelbar an der Füllrohröffnung durch einen Ring eingeschnürt, so dass das aus der Füllrohröffnung austretende Wurstbrät nicht in Richtung zum Anschlagzylinder zurückfliessen kann. Anschliessend folgen an sich bekannte Einrichtungen zum Verschliessen bzw. Abbinden der Schlauchhülle, z.B. Clip-Vorrichtungen, und eine Schneidestation zum Abtrennen des gefüllten und verschlossenen Schlauchabschnitts.

Zu Beginn des Füllvorgangs wird zunächst der entraffte Raupenanfang über die glättenden Elemente gezogen und in der Clip-Vorrichtung verschlossen. Um das Aufbringen der Raupe auf das Füllrohr zu erleichtern, werden die glättenden Elemente möglichst flach auf das Füllrohr geschwenkt, in dem man z.B. das zweite Aussenrohr längsaxial in Gegenrichtung zur Füllrohröffnung verschiebt, und der Anschlagzylinder entweder längsaxial zum Füllrohr verschoben oder, falls der Anschlagzylinder aus Segmenten besteht, die Segmente vom Füllrohr weggeklappt.

Durch den Druck, mit dem das pastöse Füllgut, z.B. Wurstmasse, durch das Füllrohr in den entrafften Teil der schlauchförmigen Hülle gepresst wird, wird die Hülle fortlaufend über die äussere Oberfläche der glättenden Elemente gezogen, wobei sie gleichzeitig entrafft und geglättet wird. Infolge der Reibungskräfte durch die gegenseitige Berührung von Anschlagzylinder, Schlauch und glättenden Elementen wird der Abzug der Schlauchhülle abgebremst. Die Bremswirkung wird nicht durch das Ausmass der Spreizung des Schlauchs reguliert, sondern durch die Anpresskraft zwischen glättenden Elementen und Anschlagzylinder, die durch Verschieben z.B. des zweiten Aussenrohrs eingestellt wird. Hierbei arbeitet man gewöhnlich mit einer Abzugsgeschwindigkeit von 10 bis 20 m/min.

Nachdem der Schlauch vollständig gefüllt ist, werden die glättenden Elemente durch längsaxiales Verschieben z.B. des zweiten Aussenrohrs in Gegenrichtung zur Füllrohröffnung erneut flach auf die äussere Oberfläche des Füllrohrs angelegt, der Anschlagzylinder zumindest teilweise entfernt, z.B. durch Aufklappen der Segmente des Anschlagzylinders oder durch Verschieben des Anschlagzylinders parallel zur Füllrohrlängsachse. Danach kann der nächste geraffte Schlauch auf das Füllrohr aufgebracht werden.

Das längsaxiale Verschieben z.B. des zweiten Aussenrohrs kann von Hand oder durch mechanisch, hydraulisch oder pneumatisch wirkende Einrichtungen erfolgen.

Die Erfindung wird anhand der Fig. 1, 2 und 3 erläutert.

Fig. 1 zeigt die Anordnung mit der Vorrichtung in Seitenansicht und im Schnitt der Linie I–I der Fig. 2,

Fig. 2 zeigt die Anordnung der Fig. 1 in Frontansicht im Schnitt der Linie II–II der Fig. 1,

Fig. 3 zeigt ausschnittsweise eine Anordnung mit einer alternativen Ausführungsform der Vorrichtung.

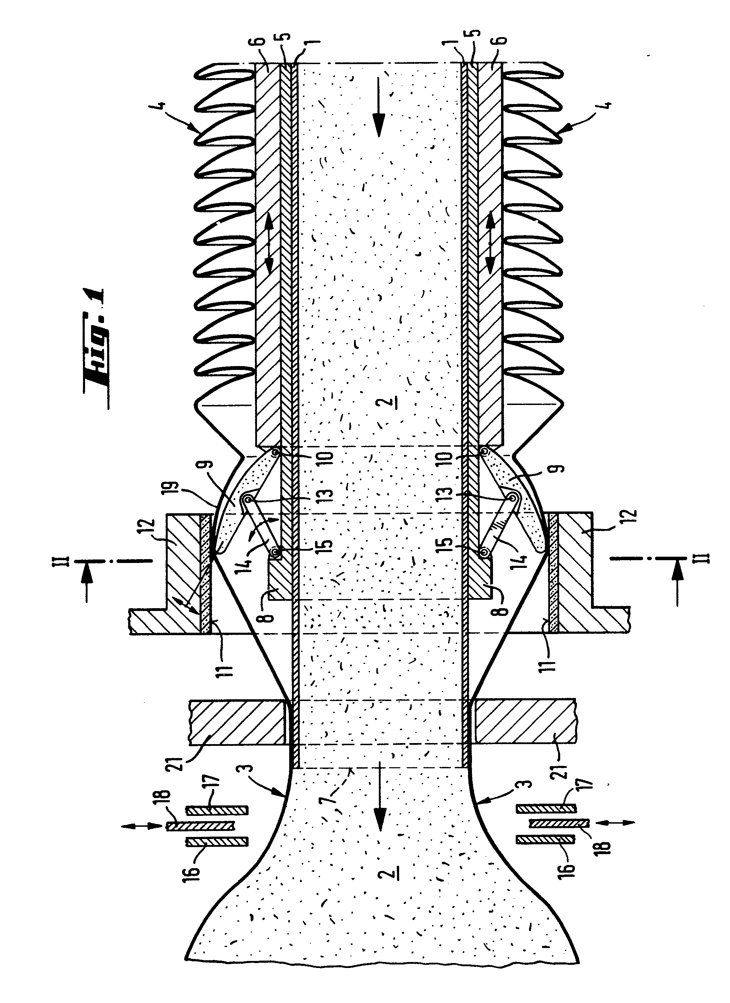

Die Anordnung der Fig. 1 besteht aus dem Füllrohr 1 einer Fülleinrichtung, durch welches fliessfähige Masse 2 unter Druck in den entrafften Teil 3 der Schlauchhülle ausfliesst. Der geraffte Teil 4 der Schlauchhülle befindet sich auf dem zweiten Aussenrohr 6, welches auf dem ersten Aussenrohr 5 längsaxial verschiebbar und feststellbar angeordnet ist. Das erste Aussenrohr 5 ist lösbar an einem nicht dargestellten Maschinenständer befestigt und endet in der Nähe der Füllrohröffnung 7 in Form eines Bundes 8. Die glättenden Elemente 9 sind mit ihrem ersten Oberflächenende am Ende des zweiten Aussenrohrs 6 über Drehlager 10 schwenkbar befestigt, während ihre äussere Oberfläche am zweiten Oberflächenende die Schlauchhülle gegen die als Bremsbelag ausgebildete zylindrische Innenfläche 11 des Anschlagzylinders 12 andrückt. Die glättenden Elemente 9 sind ferner im Abstand zu ihrem ersten Oberflächenende über ein Schwenklager 13 an Koppeln 14 fixiert, welche an einem Stützlager 15 am Bund 8 des ersten Aussenrohrs 5 befestigt sind. Mit 16 und 17 sind schematisch dargestellte Clipeinrichtungen zum Verschliessen der Wursthüllen und mit 18 eine Schneideeinrichtung bezeichnet.

An der Füllrohröffnung 7 ist eine an sich bekannte Einrichtung zur Verhinderung des Zurückfliessens der fliessfähigen Masse in Gegenrichtung zur Schlauchfortbewegung angebracht. Sie hat die Form eines Ringes 21, der den Schlauch einschürt.

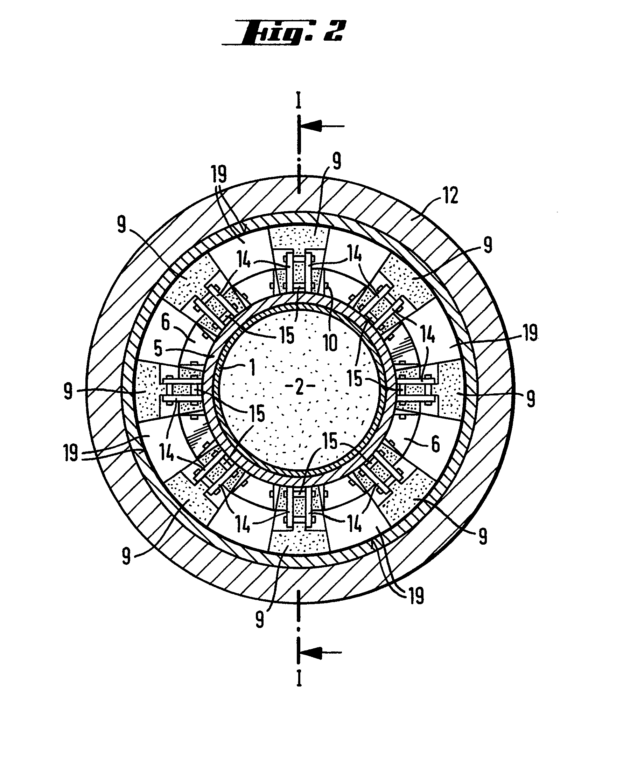

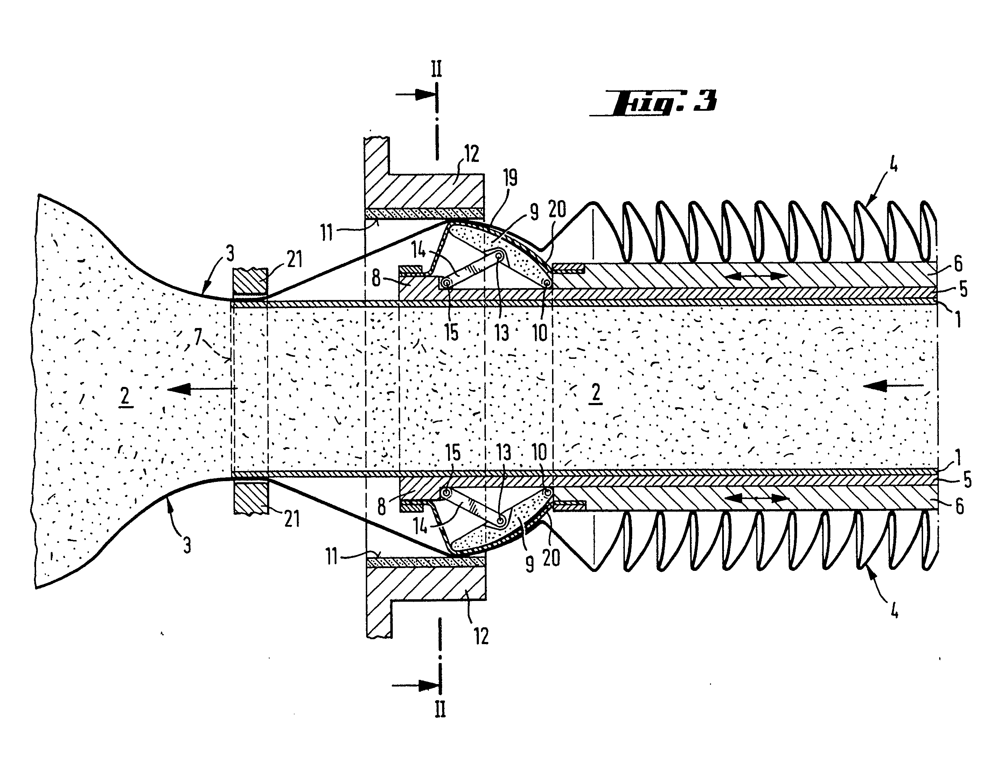

In Fig. 2 und 3 haben die Bezugsziffern die gleiche Bedeutung wie in Fig. 1.

In Fig. 1 und 2 ist mit 19 der Schlauchhüllenteil vom Einlauf in die Anpresszone zwischen glättenden Elementen 9 und zylindrische Innenfläche 11 bezeichnet. Die in Fig. 3 ausschnittsweise dargestellte Alternative zeigt einen zusätzlichen Kunststoff- oder Gummibalg 20, der beim Spreizen der Elemente 9 gegen die zylindrische Innenfläche 11 des Anschlagzylinders 12 gedrückt wird. Er ist am Bund 8 des ersten Aussenrohrs 5 und am Ende des zweiten Aussenrohrs 6 befestigt.

In Fig. 3 sind die Clipeinrichtungen 16, 17 und die Schneideeinrichtung 18 nicht dargestellt.

Die Vorrichtung der Erfindung zeigt den Vorteil, dass die geraffte Schlauchhülle 4 bereits in weitgehend entrafftem, faltenfreiem Zustand 19 in den Reibungsbereich einläuft, so dass ein ruckfreier Abzug der Schlauchhülle beim Füllvorgang gewährleistet ist und die Gefahr von Abrissen stark verringert ist. Durch Änderung der Anpresskraft der glättenden Elemente 9 auf den Anschlagzylinder 12 kann sogar während des Füllprozesses das Füllkaliber eingestellt, korrigiert oder gesteuert werden.

**Patentansprüche**

1. Vorrichtung zum Entraffen, Glätten und Bremsen einer gerafften Schlauchhülle während des Füllens der Schlauchhülle mit fliessfähiger Masse (2) wie Wurstmasse, die unter Druck aus dem Füllrohr (1) einer Fülleinrichtung in die Schlauchhülle ausfliesst, umfassend ein Aussenrohr (5, 6) auf dem Füllrohr (1) und symmetrisch zur Füllrohrachse um das Aussenrohr (5, 6) angeordnete, die Schlauchhülle entraffende, glättende und bremsende Elemente (9), dadurch gekennzeichnet, dass die Vorrichtung aus zwei koaxial übereinander angeordneten Aussenrohren (5, 6) besteht, wobei das innen angeordnete, erste Aussenrohr (5) das Füllrohr (1) umgibt und wobei eines der beiden Aussenrohre gegenüber dem anderen Aussenrohr längsaxial verschiebbar ist, dass die genannten Elemente (9) aus schwenkbaren flächenhaften Körpern bestehen, die zwei einander gegenüberliegende Oberflächen aufweisen, wobei die eine, äussere Oberfläche zum entraffen, glättenden und bremsenden Zusammenwirken mit der Schlauchhülle bestimmt ist, dass jedes der genannten Elemente (9) an einem ersten Oberflächenende mittels eines Drehlagers (10) am der Füllrohröffnung (7) zugekehrten Ende des zweiten Aussenrohres (6) sowie im Abstand von seinem ersten Oberflächenende über ein Schwenklager (13) an einer Koppel (14) schwenkbar fixiert ist, wobei diese Koppel (14) an einem Stützlager (15) an dem der Füllrohröffnung (7) zugekehrten Ende des ersten Aussenrohres (5) schwenkbar befestigt ist, und dass sie ferner aus einem feststehenden, im Querschnitt im wesentlichen kreisförmigen Anschlagzylinder (12) besteht, der die besagten Elemente (9) und das Füllrohr (1) koaxial im Abstand umgibt und gegen dessen Innenfläche (11) die Elemente (9) mit ihrer äusseren Oberfläche durch längsaxiales Verschieben des verschiebbaren Aussenrohres und Schwenken der flächenhaften Körper (9) über die Drehlager (10) den entrafften Teil (3) der Schlauchhülle mit einstellbarer Presskraft anpressen.

2. Vorrichtung nach Anspruch 1, dadurch gekennzeichnet, dass sie einen unmittelbar an der Füllrohröffnung angebrachten Ring (21) umfasst, durch den ein entraffter Teil (3) Schlauchhülle eingeschnürt wird zur Verhinderung des Zurückfliessens der aus der Füllrohröffnung (7) austretenden Masse in Gegenrichtung zur Schlauchfortbewegung.

3. Vorrichtung nach Anspruch 1 oder 2, dadurch gekennzeichnet, dass sie eine Abbinde- oder Clipeinrichtung (16, 17) sowie gegebenenfalls Schneidestation (18) umfasst.

4. Vorrichtung nach einem der Ansprüche 1 bis 3, dadurch gekennzeichnet, dass der lichte Durchmesser des Anschlagzylinders (12) kleiner ist als der vorgegebene äussere Durchmesser des entrafften Teils (3) der Schlauchhülle.

5. Vorrichtung nach einem der Ansprüche 1 bis 4, dadurch gekennzeichnet, dass die Elemente (9) von einem Balg (20) umgeben sind, der mit seinen Enden an den beiden Aussenrohren (5, 6) befestigt ist.

## Claims

1. A device for deshirring, smoothing and braking a shirred tubular casing during the stuffing of the tubular casing with a fluid mass (2), such as sausage meat, which flows under pressure out of the stuffing horn (1) of a stuffing machine into the tubular casing, said device comprising an outer tube (5, 6) mounted on the stuffing horn (1) and elements (9) for deshirring, smoothing and braking the tubular casing, which are arranged around the outer tube (5, 6) and extend symmetrically with respect to the axis of the stuffing horn, characterized in that the device comprises two outer tubes (5, 6) arranged coaxially over each other, with the innermost, first outer tube (5) surrounding the stuffing horn (1) and one of the two outer tubes being longitudinally displaceable relative to the other outer tube, that said elements (9) are pivotable, planar bodies having two surfaces which lie opposite each other, whereby the outer of these surfaces is intended for exerting a deshirring smoothing and braking action onto the tubular casing, that, by means of a pivotable joint (10), the first end of each of said elements (9) is fastened to the end of the second outer tube (6), which is directed towards the stuffing horn outlet (7) each of said elements is furthermore pivotably fastened to a connecting arm (14) by means of a pivotable joint (13) provided at a distance from said first ends of said elements, whereby said connecting arm (14) is pivotably fastened to a supporting mount (15) provided at the end of the first outer tube (5), which is directed toward the opening (7) of the stuffing horn (1), and in that said device furthermore comprises a fixed stop cylinder (12) having a substantially circular cross-sectional configuration, which coaxially surrounds said elements (9) and is spaced therefrom, and against the inner surface (11) of which the deshirred portion (3) of the tubular casing is pressed with an adjustable pressure force by the outer surfaces of the elements (9), by displacing the displaceable outer tube in the direction of the longitudinal axis and pivoting the planar bodies (9) about the pivotable joints (10).

2. Device as claimed in Claim 1, which comprises a spring (21) immediately adjacent the stuffing horn outlet (7), by which a deshirred portion (3) of the tubular casing is constricted for preventing backflow of the material issuing from the stuffing horn outlet (7) in a direction opposite to the direction of movement of the tubing.

3. Device as claimed in Claim 1 or 2, which comprises means (16, 17) for closing the stuffed tubular casing and optionally means (18) for cutting off the closed stuffed tubular casing.

4. Device as claimed in any of Claims 1 or 3, wherein the inside diameter of the central opening of the stop cylinder (12) is smaller than the prescribed outer diameter of the deshirred portion (3) of the tubular casing.

5. Device as claimed in any of Claims 1 to 4, wherein said elements (9) are surrounded by a flexible covering (20), the ends of which are fastened to the two outer tubes (5, 6).

## Revendications

1. Dispositif pour déplisser, lisser et freiner une enveloppe tubulaire flexible plissée pendant le remplissage de l'enveloppe tubulaire avec une masse fluide (2) telle qu'une masse à saucisse sortant sous pression du tube de remplissage (1) d'un équipement de remplissage pour venir dans l'enveloppe tubulaire flexible, comprenant un tube extérieur (5, 6) placé sur le tube de remplissage (1), des éléments (9) déplissant, lissant et freinant l'enveloppe tubulaire flexible placés autour du tube extérieur (5, 6) et symétriquement par rapport à l'axe du tube de remplissage, caractérisé en ce que ce dispositif se compose de deux tubes extérieurs (5, 6) disposés coaxialement l'un au-dessus de l'autre, le premier tube extérieur (5) disposé à l'intérieur entourant le tube de remplissage (1) et l'un des deux tubes extérieurs étant déplaçable longitudinalement par rapport à l'autre tube extérieur, en ce que les éléments précités (9) se composent d'éléments pivotants et plans présentant deux surfaces opposées, leur surface extérieure étant destinée à déplisser, lisser et freiner l'enveloppe tubulaire, en ce que chacun des éléments précités (9) est fixé, à l'aide d'un coussinet de pivotement (10), au niveau d'une première extrémité de surface, à l'extrémité du second tube extérieur (6) orientée vers l'orifice du tube de remplissage (7) et en ce qu'à une certaine distance de sa première extrémité de surface cet élément (9) est fixé à une pièce de couplage (14) à l'aide d'un coussinet de pivotement (13), cette pièce de couplage (14) étant fixée à un support (15) à l'extémité du premier tube extérieur (5) orientée vers l'orifice du tube de remplissage (7) de façon pivotante, et en ce qu'il comprend de plus un vérin de butée (12) fixe et de forme essentiellement circulaire en section entourant les éléments (9) en question et le tube de remplissage (1) à une certaine distance et coaxialement, et contre la face intérieure (11) duquel la partie déplissée (3) de l'enveloppe tubulaire est pressée, à une pression réglable, par la surface extérieure des éléments (9) par déplacement longitudinal du tube extérieur déplaçable et pivotement des corps plans (9) par l'intermédiaire des coussinets de pivotement (10).

2. Dispositif selon la revendication 1, caractérisée en ce qu'il comprend une bague (21) placée directement au niveau de l'orifice du tube de remplissage et destinée à rétrécir une partie déplissée (3) de l'enveloppe tubulaire flexible, pour éviter le retour de la masse sortant de l'orifice du tube de remplissage (7) dans le sens opposé au déplacement du boyau flexible.

3. Dispositif selon la revendication 1 ou 2, caractérisé en ce qu'il comprend un équipement de liage ou à clip (16, 17) ainsi que, le cas échéant, une station de coupe (18).

4. Dispositif selon l'une des revendications 1 à 3, caractérisé en ce que le diamètre intérieur du vérin de butée (12) est inférieur au diamètre extérieur donné de la partie déplissée (3) de l'enveloppe tubulaire flexible.

5. Dispositif selon l'une des revendications 1 à 4, caractérisé en ce que les éléments (9) sont entourés d'un soufflet (20) dont les extrémités sont fixées sur les deux tubes extérieurs (5, 6).

Fig. 1

Fig. 2

_Fig. 3_

0 068 190